# EUROPEAN PATENT APPLICATION

(11) **EP 2 752 142 A1**
(43) Date of publication of application: **09.07.2014**
(21) Application number: 13199626.6
(22) Date of filing: 27.12.2013
(51) Int. Cl.: A47J 43/042

(54) **Structure of speed-controllable stirring container**

(30) Priority: 03.01.2013 TW 102100091
(71) Applicant: Yang, Shiu-Cheng, 325 Taoyuan County (TW)
(72) Inventor: Yang, Shiu-Cheng, 325 Taoyuan County (TW)
(74) Representative: Horak, Michael

(57) **Abstract**

A speed-controllable stirring container includes a container (10), a fixing base (20), a rotating device (30), an actuation member (40), and an elastic body (50). The rotating device (30) is mounted in the fixing base (20) and includes a rotor (31) having a unidirectional rotation driving member (311) coupled to the container (10) so that the container (10) is driven by the rotor (31) to rotate unidirectionally The actuation member (40) extends into the fixing base (20) and is reciprocally movable to drive the rotor (31). The elastic body (50) helps position returning of the actuation member (40). As such, through the movement of the actuation member (40) to drive the container (10) to rotate, effects of stirring and temperature reducing can be applied to the substance (such as liquid) received and held in the container (10). Further, the actuation member (40) can be readily and successively reciprocated so as to keep the container (10) continuously rotating thereby achieving convenient and effective control of stirring speed of the container (10).

## Description

### (a) Technical Field of the Invention

The present invention generally relates to a structure of a stirring container, and more particularly to a structure of a speed-controllable stirring container that enables stirring and temperature reduction of a substance (such as liquid) received in the container and allows a user to readily control the container for performing a continuous stirring operation.

### (b) Description of the Prior Art

Modem people are used to making or brewing a beverage, such as coffee, milk, and tea. The general process is first depositing coffee powder or milk powder into a container and the pouring hot water into the container, followed by a step of stirring. To make the brewed beverage, such as coffee powder and milk powder, completely dissolved in water, stirring must be carried out for a substantial period of time before complete dissolution in water can be achieved. Further, after the beverage has been made, it is still hot for drinking, so that further stirring is necessary for lowering the temperature of the brewed beverage in order to make it fit to drinking.

Generally speaking, stirring is made by hand holding a stirring bar, which can be for example a chopstick, a rod bar, or even a spoon, and circling the stirring bar in the water. This requires a stirring bar to be prepared in advance and may also lead to a potential risk of burning a nearby person if the application of force for stirring is inadequate to cause spoiling of the hot brewed beverage. In addition, the user may sometimes feel tired and sore in the hand holding the stirring bar. Apparently, this way of stirring is generally inconvenient.

Techniques and structures associated with stirring of beverage are known from for example Taiwan Utility Model No. M405243, which teaches using a press-down device to drive a stirring bar to rotate in a containing chamber in order to achieve an effect of stirring and mixing a powder-like substance and a liquid contained in the chamber. However, such a known device has at least the following advantages:
(1) A stirring bar arranged at a bottom of a cup is used to stir the substance received in the cup. The stirring is simply an operation carried out at the bottom of cup by the stirring bar and the cup itself is fixed and not rotating. The result of stirring is thus very limited. A preferred way includes simultaneous rotation of the cup in order to enhance the effect of stirring.
(2) The rotation of the stirring bar is driven by a press-down device, a rotating device, and a rack-gear based transmission structure. No one-way driving structure, such as one-way bearing, is arranged between the rotating device and the stirring bar. Thus, after the press-down device has been pressed down to cause the stirring bar to rotate, during the process when the press-down device is moved by a spring force in an opposite direction to return to the original condition, since the rotating device and the stirring bar are still in a mated condition, if the user attempts to take a further pressing action to make the stirring bar further rotating, then the direction of driving so made is exactly opposite to the direction in which the stirring bar is rotating. Consequently, a resisting force is induced and jamming may occur, making it difficult to smoothly press down the press-down device thereby the speed of the stirring bar being not controllable.
(3) As discussed in the above point (2), during the process when the press-down device returns to the original condition, the stirring bar is also caused to rotate in the opposite direction, so that the stirring bar cannot keep on rotating in the same direction.
(4) It would be difficult for the user to cleanse the stirring bar and dirt and contamination may be deposited therein.

Thus, the known technique and structure for stirring beverage are not perfect and further improvement is desired.

The present invention aims to provide a solution that realizes such an improvement.

### SUMMARY OF THE INVENTION

An object of the present invention is to provide a speed-controllable stirring container that enables stirring and temperature reduction of a substance received in the container and allows a user to readily control the container for performing a continuous stirring operation.

To achieve the above object, the present invention comprises a container, a fixing base, a rotating device, an actuation member, and an elastic body, wherein the container receives and holds therein a substance to be stirred; the fixing base carries and supports the container and comprises a receiving space formed therein; the rotating device comprises a rotor rotatably arranged in the receiving space, wherein the rotor comprises a unidirectional rotation driving member and a pinion, the unidirectional rotation driving member being coupled to a bottom of the container to allow the rotor to drive the container to rotate unidirectionally; the actuation member extends into the fixing base and is reciprocally movable, the actuation member comprising a rack, which drives the pinion to rotate; and the elastic body is arranged in the receiving space for position returning of the actuation member in the reciprocal movement. As such, through the movement of the actuation member to drive the container to rotate, effects of stirring and temperature reducing can be applied to the substance (such as liquid) received and held in the container. Further, the actuation member can be readily and successively reciprocated so as to keep the container continuously rotating thereby achieving convenient and effective control of stirring speed of the container.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is an exploded view showing a container and a fixing base according to the present invention.
FIG 2 is an exploded view showing the present invention with the container removed.
Figure 3 is an exploded view showing the fixing base according to the present invention.
Figure 4 is a top view, in sectioned form, showing the fixing base according to the present invention.
Figure 5 is a top view, in sectioned form, illustrating an operation of the present invention.
Figure 6 is a perspective view illustrating an operation of the present invention.
Figure 7 is a perspective view showing another preferred embodiment according to the present invention.
Figure 8 is an exploded view showing said another preferred embodiment of the present invention.
Figure 9 is a perspective view illustrating an operation of said another preferred embodiment of the present invention.
Figure 10 is a perspective view illustrating a blending member according to a further preferred embodiment of the present invention.
Figure 11 is an exploded view showing a further embodiment of the present invention.
Figure 12 is a top view, in sectioned form, showing a fixing base according to said further embodiment of the present invention.
Figure 13 is a top view, in sectioned form, illustrating an operation of the fixing base according to said further embodiment of the present invention.
Figure 14 is an exploded view showing a container and a rotary disk comprising a different coupling structure according to the present invention.
Figure 15 is a perspective view showing a blending member according to yet a further embodiment of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

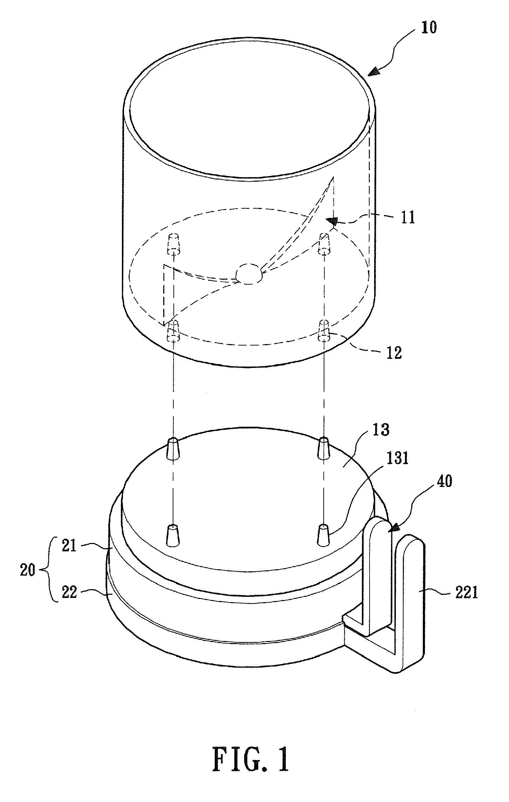

Referring to Figures 1, 2, and 6, a preferred embodiment of the present invention comprises a container 10, a fixing base 20, a rotating device 30, an actuation member 40, and an elastic body 50. The actuation member 40 is manually pullable to drive the container 10 to rotate, thereby achieving an effect of stirring and temperature-reducing on a substance (such as liquid) received in the container 10 and allowing a user to readily and successively pull the actuation member 40 to cause the container 10 to continuously carry out a stirring operation so as to conveniently and effectively control the stirring speed of the container 10.

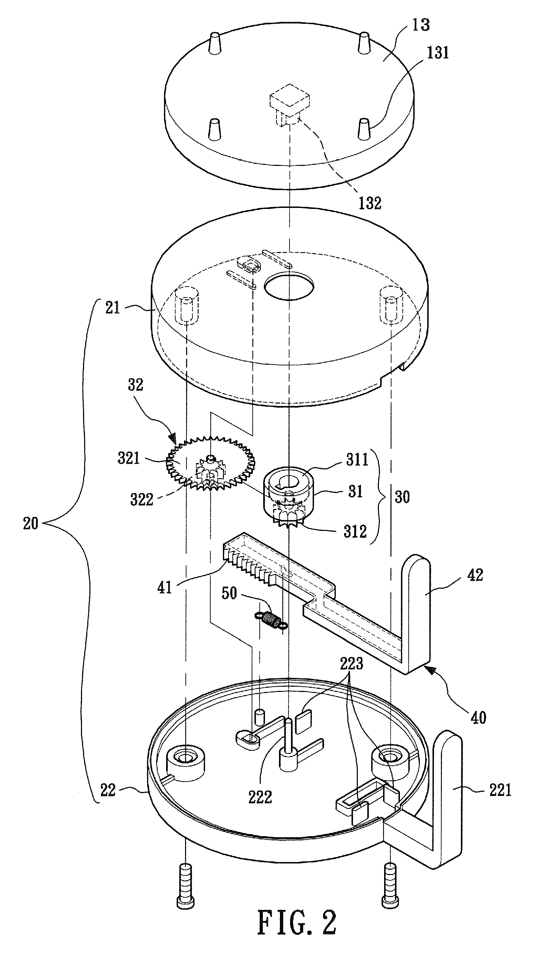

Referring to Figures 1 and 2, the container 10 according to the present invention is provided for receiving and containing a substance, such as one of liquid, powder and solid or a combination thereof. The container 10 has an inside bottom on which at least one blending member 11, which is arranged in projecting form and has a shape complying with fluid stirring engineering, is provided for stirring the substance. The container 10 has an outside bottom in which a plurality of fitting holes 12 is formed.

The container 10 further comprises a rotary disk 13. The rotary disk 13 has a surface on which a plurality of coupling pegs 131 is provided for respectively coupling with the fitting holes 12 so as to realize easy assembling and disassembling of the container 10 and the rotary disk 13, which allows replacement and interchange of different containers 10. The rotary disk 13 is provided, on an underside thereof, with an axle 132.

Referring to Figures 1 and 2, the fixing base 20 according to the present invention is provided for carrying and supporting the container 10. The fixing base 20 comprises a casing 21 and a bottom board 22 and has an internal receiving space formed therein. The bottom board 22 is provided with a hand-holding section 221 which a hand can hold.

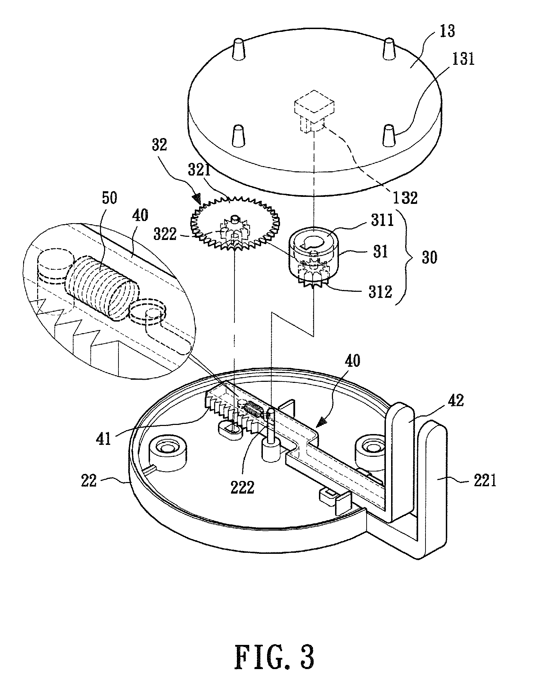

Referring to Figures 2, 3, and 4, the rotating device 30 according to the present invention comprise a rotor 31 that is rotatably arranged in the receiving space of the fixing base 20 and a toothed wheel unit 32. The rotor 31 is rotatably mounted to a positioning bar 222 mounted on the bottom board 22. The rotor 31 comprises a unidirectional rotation driving member 311, such as a one-way bearing, set at an upper portion thereof The rotor 31 comprises a pinion 312 arranged at a lower portion thereof. The unidirectional rotation driving member 311 is coupled to the axle 132 of the rotary disk 13 so that the rotor 31 may drive the rotary disk 13 and the container 10 to rotate unidirectionally.

The toothed wheel unit 32 comprises a toothed disk 321 at a top side thereof and a transmission gear 322 at a lower side thereof. The toothed disk 321 is engageable with and drives the pinion 312.

The actuation member 40 extends into the fixing base 20 and is guided by a plurality of guide sections 223 mounted on the bottom board 22 to take reciprocal movement. The actuation member 40 comprises a rack 41. The rack 41 is engageable with and drives the transmission gear 322. The actuation member 40 has an end that is exposed outside and comprises a handle 42 to be hand-held for pulling and pushing.

In a different embodiment, if it is not necessary for the actuation member 40 and the rotor 31 to have a high rotational speed ratio or if it is desired to simplify the structure, the toothed wheel unit 32 can be omitted and the rack 41 is set to directly mate and drive the pinion 312.

The elastic body 50 is received in the receiving space of the fixing base 20. The elastic body 50 is an extension spring in the instant embodiment. An end of the elastic body 50 is fixed to the bottom board 22 and an opposite end fixed to the actuation member 40. The elastic body 50 provides a spring force when the actuation member 40 is pulled to move outward, in order to help return the actuation member 40.

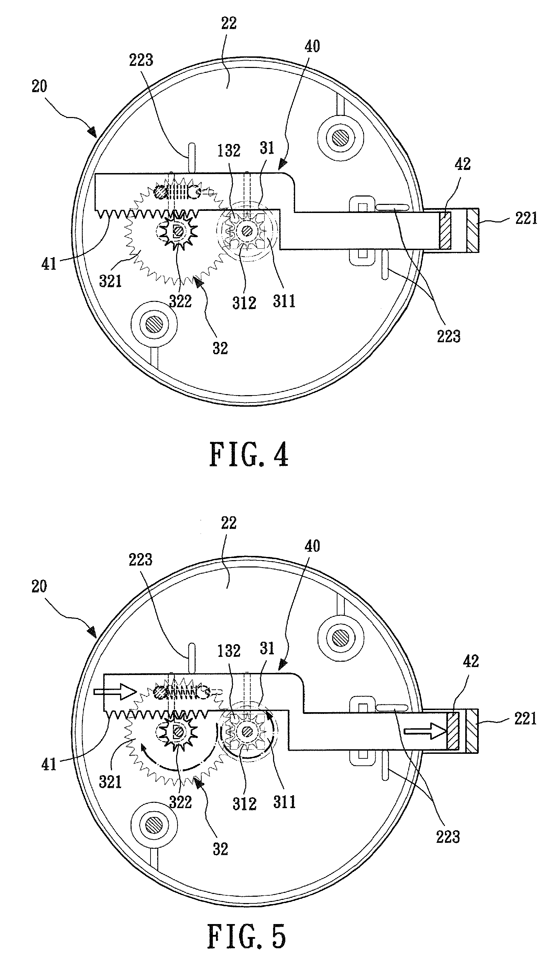

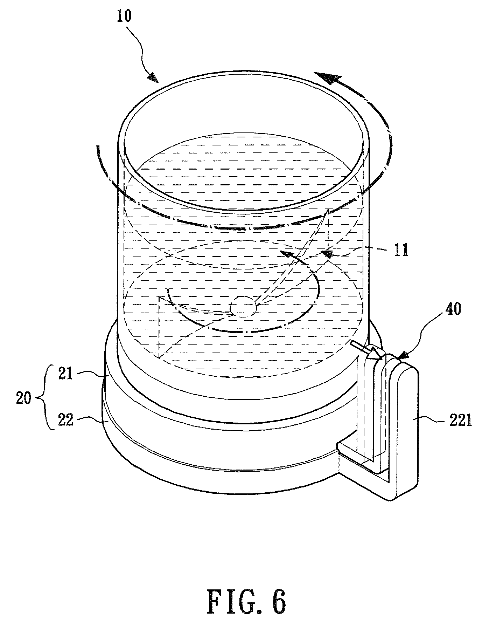

Referring to Figures 5 and 6, to operate the present invention, a substance to be stirred, such as a liquid, is first deposited in the container 10 and the actuation member 40 is pulled by a hand to have the rack 41 moved so as to drive the transmission gear 322 to rotate, then the toothed disk 321 and the pinion 312 are sequentially caused to rotate and finally, the rotor 31 rotates to drive the axle 132, together with the rotary disk 13 and the container 10, to rotate. With the blending member 11 arranged inside the container 10, an effect of stirring and temperature reducing can be caused on the substance (such as liquid) inside the container 10.

Further, during the process when the actuation member 40 is moved by the spring force in an opposite direction to return back to the original condition (namely extending deeply into the interior of the fixing base 20) after the actuation member 40 is pulled to cause the container 10 to rotate, due to the unidirectional rotation driving member 311 arranged between the rotor 31 and the axle 132, transmission is no longer maintained between the rotor 31 and the axle 132 and no resistance would be induced. The user can easily and successively pull and make reciprocal motion of the actuation member 40, keeping the container 10 continuously rotating thereby achieving a convenient and effective control of the stirring speed of the container 10.

Further, during the process when the actuation member 40 is returning back to the original condition (namely extending deeply into the interior of the fixing base 200, the axle 132 is not driven to rotate in the opposite direction so that the container 10 can keep rotating in the same direction.

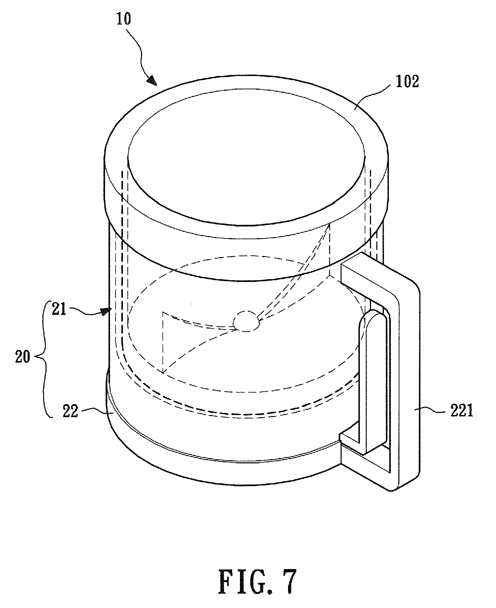

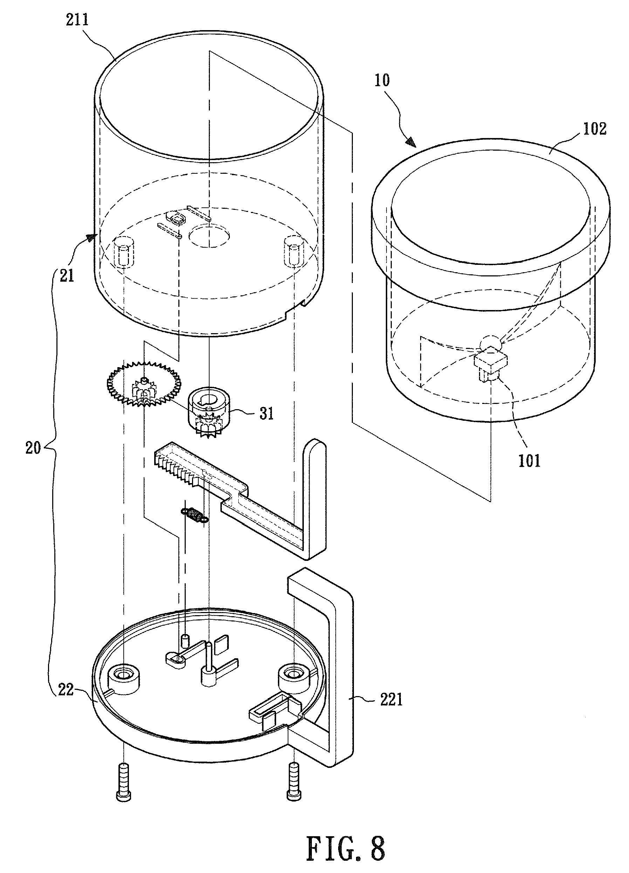

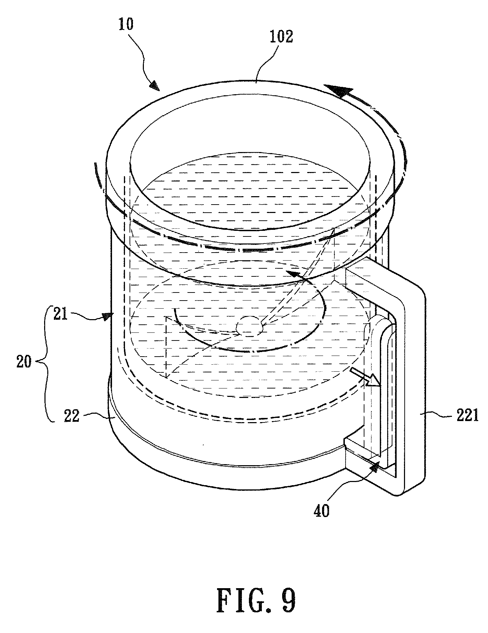

Referring to Figures 7,8, and 9, another preferred embodiment of the present invention is constructed such that the casing 21 of the fixing base 20 is provided with a circumferential wall 211 that extends upward to a predetermined height to properly surround the container 10. Further, the hand-holding section 221 is also extended upward properly for facilitating hand holding. In the instant embodiment, the container 10 is not coupled with a rotary disk 13. The container 10 comprises an axle 101 that is mounted to an outside bottom of the container for direct coupling with the rotor 31. The container 10 is provided, at the top side thereof, with a flange 102 that covers a top end of the circumferential wall 211 and does not affect the rotation of the container 10. In this way, the container 10 can equally do continuous rotation for achieving an effect of stirring and temperature reducing on a substance contained in the container 10. A container that has an integral aesthetic configuration and complies with human engineering is obtained.

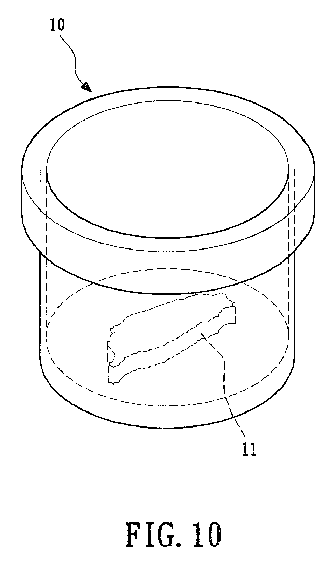

Referring to Figure 10, the blending member 11 of the container 10 according to the present invention can be of a specific configuration, such as the shape of Taiwan island, to additional provide an effect of advertisement and promotion.

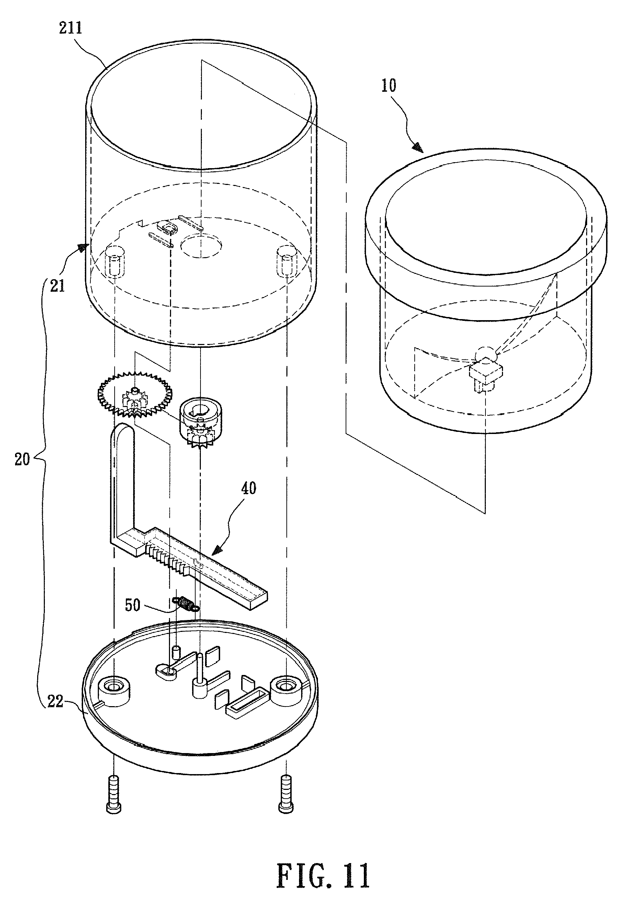

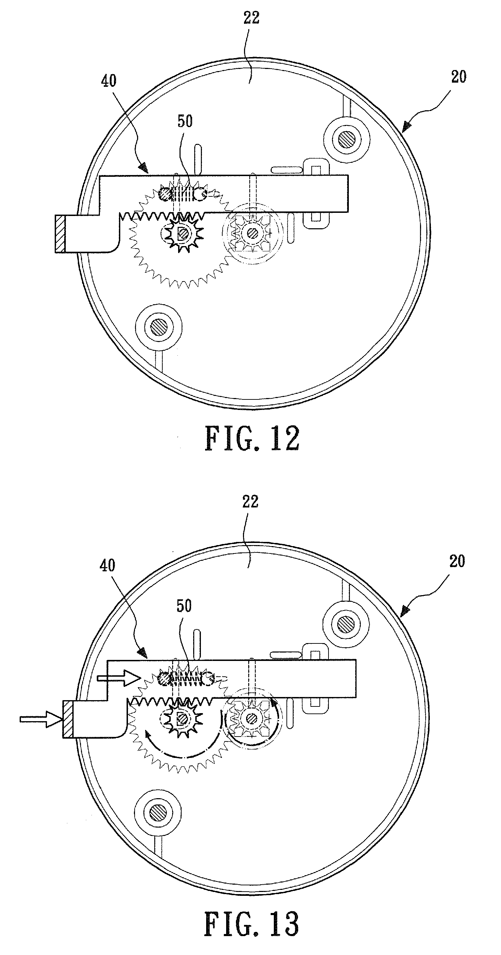

Referring to Figures 11, 12, and 13, a further preferred embodiment of the present invention is constructed so that the container 10 can be caused to rotate by pushing the actuation member 40, rather than pulling, wherein the actuation member 40 is received into the fixing base 20 from an opposite direction and the elastic body 50 is arranged to provide a spring force after the actuation member 40 is pushed inward, in order to help position returning of the actuation member 40.

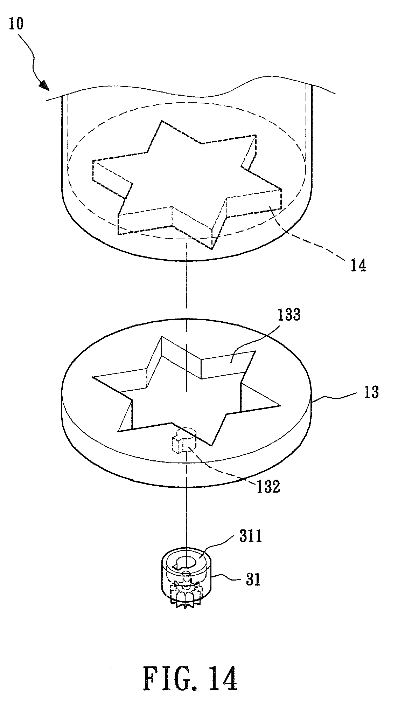

Referring to Figure 14, the container 10 and the rotary disk 13 according to the present invention are provided therebetween with another coupling structure, wherein the container 10 is provided, on the outside bottom thereof with a projecting portion 14 having a predetermined shape and the rotary disk 13 is provided, on a surface thereof, with a plurality of recessed portions 133 corresponding in shape to the projecting portion 14 for receiving the projecting portion 14 to fit therein so as make assembling and dissembling of the container 10 and the rotary disk 13 easy.

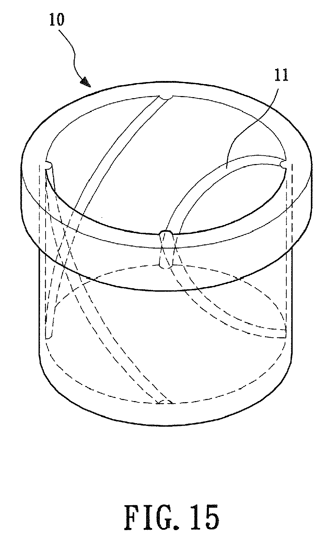

Referring to Figure 15, the blending member 11 of the container 10 according to the present invention is made in the form of curved ribs and a number of such ribs is arranged on an inner circumferential surface of the container 10 to allow the blending member 11 to provide an helical stirring effect to thereby enhance the effects of stirring and temperature reducing.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A speed-controllable stirring container, comprising:
a container (10), which is adapted to receive and hold therein a substance to be stirred;
a fixing base (20), which carries and supports the container (10) and comprises a receiving space formed therein;
a rotating device (30), which comprises a rotor (31) rotatably arranged in the receiving space, wherein the rotor (31) comprises a unidirectional rotation driving member (311) and a pinion (312), the unidirectional rotation driving member (311) being coupled to a bottom of the container (10) to allow the rotor (31) to drive the container (10) to rotate unidirectionally;
an actuation member (40), which extends into the fixing base (20) and is reciprocally movable, the actuation member (40) comprising a rack (41), which drives the pinion (312) to rotate; and
an elastic body (50), which is arranged in the receiving space for position returning of the actuation member (40) in the reciprocal movement.

2. The speed-controllable stirring container according to claim 1, wherein the bottom of the container (10) comprises a plurality of fitting holes (12), the container (10) comprising a rotary disk (13), which has a surface on which a plurality of coupling pegs (131) is mounted for coupling with the fitting holes (12) for replacement and interchange of different containers, the rotary disk (13) having an underside on which an axle (132) is mounted, the axle (132) being coupled to the unidirectional rotation driving member (311).

3. The speed-controllable stirring container according to claim 1, wherein the fixing base (20) comprises a casing (21) and a bottom board (22), which form the receiving space in the fixing base (20).

4. The speed-controllable stirring container according to claim 1, wherein the fixing base (20) comprises a hand-holding section (221) adapted to be held by a hand.

5. The speed-controllable stirring container according to claim 1, wherein the unidirectional rotation driving member (311) comprises a one-way bearing.

6. The speed-controllable stirring container according to claim 1, wherein the rotating device (30) comprises a toothed wheel unit (32), the toothed wheel unit (32) comprising a toothed disk (321) at a top side and a transmission gear (322) at a bottom side, the toothed disk (321) mating and driving the pinion (312), the rack (41) mating and driving the transmission gear (322), whereby the rack (41) drives the pinion (312) via mating through the toothed wheel unit (32).

7. The speed-controllable stirring container according to claim 1, wherein the actuation member (40) has an end forming a handle (42).

8. The speed-controllable stirring container according to claim 1, wherein the fixing base (20) comprises an upward extending circumferential wall (211) to partly cover the container (10), the container (10) comprising a flange (102) that covers a top end of the circumferential wall (211).

9. The speed-controllable stirring container according to claim 1, wherein the elastic body (50) comprises an extension spring.

10. The speed-controllable stirring container according to claim 1, wherein the container (10) has a bottom on which a projecting portion (14) having a predetermined shape is formed, the container (10) comprising a rotary disk (13), which has a surface forming a plurality of recessed portions (133) corresponding in shape to the projecting portion (14) for receiving the projecting portion (14) to fit therein for replacement and interchange of different containers, the rotary disk (13) having a bottom to which an axle (132) is mounted, the axle (132) being coupled to the unidirectional rotation driving member (311).

11. The speed-controllable stirring container according to claim 1, wherein the container (10) comprises therein at least one projecting blending member (11) for stirring the substance.

12. The speed-controllable stirring container according to claim 11, wherein the blending member (11) comprises curved ribs and a number of such curved ribs is provided on an inner circumference of the container (10) to allow the blending member (11) to provide an helical stirring effect.
